# EUROPÄISCHE PATENTSCHRIFT

(11) **EP 0 686 605 B1**
(45) Veröffentlichungstag und Bekanntmachung des Hinweises auf die Patenterteilung: **09.09.1998**
(21) Anmeldenummer: 94107090.6
(22) Anmeldetag: 06.05.1994
(51) Int. Cl.: C02F 3/12, B01D 21/26, B01D 21/00, B01D 25/12, B01D 29/00

(54) **Verfahren zur biologischen Reinigung von organisch belasteten Abwässern**
Process for purification of organically polluted waste waters
Procédé pour la purification des eaux résiduaires polluées par des matières organiques

(43) Veröffentlichungstag der Anmeldung: 13.12.1995
(73) Patentinhaber: Schade, Horst, Dipl.-Ing., 45525 Hattingen (DE)
(72) Erfinder: Schade, Horst, Dipl.-Ing., 45525 Hattingen (DE)
(74) Vertreter: Behrendt, Arne, Dipl.-Ing.

(56) Entgegenhaltungen:
- EP-A- 0 544 226
- WO-A-90/09229
- DE-A- 3 840 123
- DE-A- 3 840 447
- US-A- 4 415 452
- US-A- 4 810 389
- PATENT ABSTRACTS OF JAPAN vol. 9, no. 145 (C-287) 20. Juni 1985 & JP-A-60 028 887 (KYORITSU YUKI KOGYO KENKYUSHO KK) 14. Februar 1985
- Chem.-Ing.-Tech. 64, Nr. 12, 1992, S. 1123-1126

## Beschreibung

Die Erfindung betrifft ein Verfahren zur biologischen Reinigung von organisch belasteten Abwässern, bei dem die Abwasserinhaltsstoffe in einem Bioreaktor oder Belebtbecken mikrobiell umgesetzt werden, von dem dabei entstehenden Schlamm das behandelte Wasser abgetrennt wird und der abgetrennte Schlamm zum Teil in den Bioreaktor bzw. das Belebtbecken zurückgeführt und zum Teil als Überschußschlamm abgeführt wird, wobei das in dem Bioreaktor bzw. dem Belebtbecken behandelte Abwasser zunächst eine Hydrozyklonstufe durchläuft, aus der die abgeschiedenen Feststoffe in den Bioreaktor bzw. das Belebtbecken zurückgeführt werden und aus deren Überlaufwasser der darin enthaltene Schlamm unter erhöhtem Druck abgefiltert und eingedickt wird.

Bekanntlich werden die Abwasserinhaltsstoffe bei aeroben biologischen Verfahren durch die mikrobielle Umsetzung in unschädliche Stoffwechselprodukte und körpereigene Substanzen umgewandelt. Es ist bekannt, von diesem biologischen Schlamm das Abwasser durch eine Dichtetrennung in Absetz-Flotations-Membran- oder Ultra-Filtrationsanlagen abzutrennen, wodurch eine vollständige Feststoff-Flüssig-Trennung erreichbar ist. Beispielsweise ist aus der DE-PS 37 09 174 ein Verfahren zur biologischen Reinigung von organisch belasteten Abwässern bekannt, bei dem die mikrobielle Umsetzung unter Überdruck ausgeführt und die Abtrennung des behandelten Abwassers vom biologischen Schlamm durch eine Membran- oder Ultrafiltration vorgenommen wird. Nur bei Flotations-Membran- oder Ultra-Filtrationsanlagen ist die erzielbare Konzentration an Biomasse ausreichend hoch. Bei Verwendung normaler Absetzanlagen findet die Konzentrierung durch Dichtetrennung ihre Grenzen bei ca. 1 bis 3 %.

Bei einem nach dem Stande der Technik bekannten Verfahren der eingangs genannten Art (vgl. EP-A-0 544 226) wird Belebtschlamm aus einem Bioreaktor durch einen Hydrozyklon geleitet, die Feinlaufphase des Hydrozyklons in ein Nachklärbecken geführt und die Schlammphase aus dem Hydrozyklon in einen ersten und einen zweiten Teilstrom unterteilt, wobei der erste Teilstrom in das Belebungsbecken zurückgeleitet und der zweite Teilstrom als Überschußschlamm entfernt wird.

Es ist deshalb Aufgabe der Erfindung, daß schon in der Hydrozyklonstufe eine möglichst große Menge an Belebtschlamm abgeschieden wird und dem Bioreaktor bzw. dem Belebtbecken wieder zugeführt werden kann. Hierdurch soll die Anlage insgesamt anlagetechnisch und energetisch entlastet werden. Die Erfindung betrifft darüber hinaus eine Vorrichtung zur Durchführung dieses Verfahrens.

Ausgehend von einem Verfahren der eingangs beschriebenen Art wird diese Aufgabe erfindungsgemäß dadurch gelöst, daß dem zu behandelnden Abwasser Kohle mit einer Korngröße von 30 bis 500 µm beigemischt wird, die als Trägermaterial für die Bakterien und als Hydrozyklonhilfe dient und daß der durch Eindicken entstehende pumpfähige Schlamm zum Teil als Rücklaufschlamm dem zu behandelnden Abwasser beigegeben wird und zum Teil als Überschußschlamm abgezogen wird.

Beim Verfahren gemäß der Erfindung wird durch die Beimischung von Kohle in der angegebenen Körnung von 30 bis 500 µm der Anteil an Belebtschlamm, der schon in der Hydrozyklonstufe abgeschieden werden kann, in entscheidendem Maße erhöht.

Das bei der Eindickfiltration gewonnene Abwasser ist so sauber, daß es in einer anschließenden einfachen Sandfiltration nachgereinigt werden kann. Eine vorteilhafte Weiterbildung des Verfahrens gemäß der Erfindung sieht deshalb vor, daß das bei der Eindickfiltration vorgereinigte Abwasser abschließend einer Sandfiltration unterzogen wird.

Der Einsatz von feingemahlener Kohle bei der aeroben biologischen Abwasserreinigung ist aus der DE-OS 38 30 123 ansich bekannt, dort allerdings in einem anderen Wirkungszusammenhang.

Die Erfindung sieht vor, als Kohle Aktivkohle einzusetzen und die folgenden Verfahrensbedingungen einzuhalten:
- Das in dem Bioreaktor oder Belebtbecken vorliegende Gemisch wird so eingestellt, daß es 1 bis 1,5 % Kohle und 2 bis 3 % Belebtschlamm enthält.
- Der Feststoffgehalt des aus der Hydrozyklonstufe in den Bioreaktor bzw. das Belebtbecken zurückgeführten Gemisches beträgt 10 bis 20 %.
- Der Feststoffanteil des von der Eindickfiltration in das zu behandelnde Abwasser zurückgeführten Gemisches liegt bei 8 bis 10 %.

Bei einer bevorzugten Ausführungsform der Erfindung wird das Überlaufwasser der Hydrozyklonstufe zusammen mit dem darin enthaltenen Schlamm vor der Eindickfiltration in einem Eindicker eingedickt, aus dem der abgesetzte Schlamm abgezogen und mittels einer Pumpe unter erhöhtem Druck der Eindickfiltration zugeführt wird, während das anfallende Wasser, gegebenenfalls nach Abtrennen der Trübstoffe, direkt in die Sandfiltration eingeleitet wird.

Zweckmäßigerweise wird der Überschußschlamm entweder aus der Druckleitung zwischen dem Eindicker und der Eindickfiltration oder aus der von der Eindickfiltration zum Bioreaktor bzw. dem Belebtbecken führenden Leitung abgezogen. Die mikrobielle Umsetzung kann erfindungsgemäß sowohl unter aeroben als auch unter anaeroben Bedingungen durchgeführt werden; als zweckmäßig hat sich ein maximaler Überdruck von 1 bar erwiesen.

Die Erfindung betrifft ferner eine Vorrichtung zur Durchführung des Verfahrens, die gekennzeichnet ist durch einen Bioreaktor oder ein Belebtbecken mit Zugabevorrichtungen für das zu behandelnde Abwasser und Kohle und einer dem Bioreaktor oder Belebtbecken nachgeschalteten Hydrozyklonstufe, deren Feststoffaustrag mit dem Bioreaktor bzw. Belebtbecken verbunden ist und an deren Überlauf eine Eindickfilteranlage angeschlossen ist, deren Schlammaustrag mit einer zum Bioreaktor bzw. Belebtbecken führenden Schlammrückführungsleitung und einem Austrag für den Überschußschlamm verbunden ist. Zweckmäßigerweise besteht der Bioreaktor aus einem Hochbehälter mit ca. 6 bis 15 m WS und der Hydrozyklon aus einer Multizyklonstufe mit Zyklonen der Nenngröße 40 bis 100 mm Durchmesser.

Der Eindickfilteranlage kann ggf. ein Sandfilter nachgeschaltet sein, in welchem eine Nachreinigung des aus der Eindickfiltration anfallenden Abwassers stattfindet.

Die Eindickfiltration kann erfindungsgemäß mit einer Rahmen-Kammerfilterpresse durchgeführt werden, deren Filtrationsplatten mit Rillen versehen sind, die schneckenförmig vom Umfang zum Zentrum der Platten oder umgekehrt geführt sind und die durch Filter derart abgedeckt und abgedichtet sind, daß Kammern gebildet werden, wobei das den Kammern unter Druck zugeführte Feststoff-Flüssigkeitsgemisch den schneckenförmigen Gängen folgt und durch die Filtertücher entwässert und eingedickt wird.

Die Erfindung sieht ferner vor, daß die Eindickfilteranlage eine Einrichtung zum Umwälzen des zu entwässernden Schlammes in wenigstens einem Modul aufweist, das vorzugsweise in einem Behälter angeordnet ist und aus einem Zulaufverteiler und einem Ablaufverteiler besteht, die über eine mit einer Umwälzpumpe versehenen Leitung miteinander verbunden sind und zwischen denen eine Anzahl poröser schlauchartiger Filter angeordnet ist, die den Schlamm zurückhalten, der aus der Kreislaufleitung ausschleusbar ist, während das Abwasser getrennt abgezogen und in einer unterhalb des Moduls angeordneten Wanne aufgefangen wird.

Bevorzugte Ausführungsformen der Erfindung sehen vor, daß zwischen dem Zulaufverteiler und dem Ablaufverteiler 1 bis 50 poröse schlauchartige Filter mit einer Länge von vorzugsweise etwa 20 m angeordnet sind, daß die Filter aus porösen Schläuchen oder aus zu Kissen aneinandergereihten Schläuchen bestehen, und daß 2 bis 10, vorzugsweise 6 Module hintereinander geschaltet sind, wobei der Zulaufverteiler des ersten Moduls und der Ablaufverteiler des letzten Moduls über die Umwälzleitung miteinander verbunden sind.

Zweckmäßigerweise sind die einzelnen Module getrennt durch mit Ventilen versehenen Leitungen mit der Kreislaufleitung verbunden und getrennt zu- und abschaltbar. Ferner hat es sich als zweckmäßig erwiesen, die einzelnen Module an ein Spülsystem anzuschließen, über das die einzelnen Module unabhängig voneinander beaufschlagbar sind, nachdem sie von der Umwälzleitung abgeschaltet sind.

Auf der Zeichnung ist ein Ausführungsbeispiel der Erfindung dargestellt. Es zeigen:
- Fig. 1: ein Verfahrensschema und
- Fig. 2: eine Vorrichtung zur Durchführung der Eindickfiltration in vergrößerter Darstellung

Mit 1 ist ein Bioreaktor zur mikrobiellen Umsetzung von organisch belasteten Abwässern bezeichnet, die dem Reaktor über die Leitung 2 zugeführt werden. Dem zu behandelnden Abwasser wird Kohle mit einer Korngröße von 30 bis 500 µm beigemischt. Das aus Kohle und den mikrobiell umgesetzten Abwasserinhaltsstoffen bestehende Gemisch wird aus dem Sumpf des Bioreaktors über die Leitung 3 in eine Hydrozyklonstufe 4 gepumpt, in der die Kohle und der größte Teil des Belebtschlammes von dem Abwasser getrennt werden. Die in der Hydrozyklonstufe anfallenden Feststoffe werden über die Leitung 5 in den Bioreaktor zurückgeleitet. Das in der Hydrozyklonstufe anfallende Überlauf-Abwasser wird zusammen mit restlichem Belebtschlamm über die Leitung 6 nach Druckerhöhung durch die Speisepumpe 7 einer Eindickfiltration 8 oder 9 zugeführt.

Die Eindickfiltration 8 besteht aus einer Rahmen-Kammerfilterpresse, deren Filtrationsplatten mit Rillen versehen sind, die schneckenförmig vom Umfang zum Zentrum der Platten oder umgekehrt geführt sind und die durch Filtertücher so abgedeckt und abgedichtet sind, daß Kammern gebildet werden, denen das Feststoff-Flüssigkeitsgemisch unter Druck zugeführt wird. Das Gemisch durchläuft die schneckenförmigen Gänge und wird durch die Filtertücher entwässert und eingedickt. Der Schlamm wird über die Leitung 10 abgezogen und in den Bioreaktor zurückgeleitet. Mit 11 ist eine Pumpe bezeichnet, mit der der Schlamm im Kreislauf durch die Eindickfiltration geleitet werden kann, bis der gewünschte Eindickgrad erreicht ist. Das Abwasser wird über die Leitung 12 abgezogen und einer nachgeschalteten Sandfiltration 13 zugeführt, der das Klarwasser über eine Leitung 14 entnommen wird.

Alternativ kann die Eindickung und Filtration in der Anlage 9 vorgenommen werden, der das zu behandelnde Gemisch aus der Leitung 6 nach Druckerhöhung durch die Speisepumpe 7 über die Leitung 15 zugeführt wird.

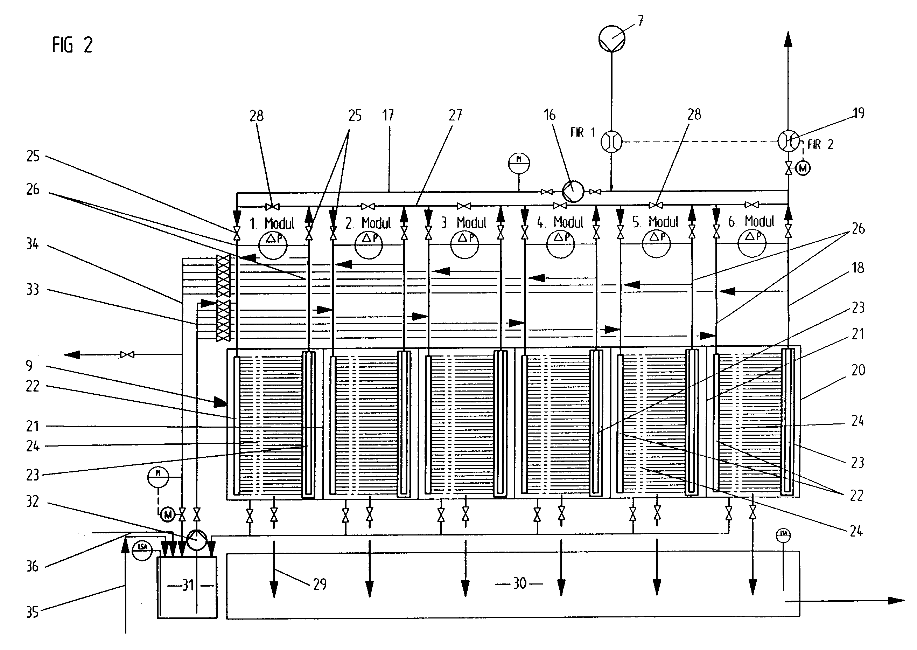

Die Eindickfiltration 9 wird anhand der Figur 2, auf der diese vergrößert dargestellt ist, erläutert.

Das Gemisch aus Abwasser und Schlamm wird über die Speisepumpe 7 in die mit 9 bezeichnete Eindickfiltration gegeben und in dieser mittels der Umwälzpumpe 16 umgewälzt. Dabei durchläuft das Gemisch den Abschnitt 17 der Umwälzleitung sowie bei dem dargestellten Ausführungsbeispiel sechs "Module", die auf der Zeichnung als 1. bis 6. Modul bezeichnet sind, und den Abschnitt 18 der Umwälzleitung, an dem ein Abzug 19 zur Rückführung von eingedicktem Schlamm in den Bioreaktor vorgesehen ist.

Die sechs Module sind hintereinander in einem Behälter 20 angeordnet, der durch Zwischenwände 21 in sechs Abteile unterteilt ist, wobei in jedem Abteil ein Modul angeordnet ist. Jedes Modul besteht aus einem Zulaufverteiler 22 und einem Ablaufverteiler 23, die über eine Vielzahl von porösen Schläuchen 24, im vorliegenden Fall etwa 40, miteinander verbunden sind. Der Ablaufverteiler 23 jedes Moduls ist über mit Ventilen 25 versehene Leitungen 26 mit dem Zulaufverteiler des in Strömungsrichtung nächsten Moduls und der Ablaufverteiler 23 des letzten, 6. Moduls mit dem Abschnitt 18 der Umwälzleitung verbunden.

Die Leitungen 26 münden in eine parallel zur Umwälzleitung 17 verlaufende Leitung 27, die mit jedem einzelnen Modul zugeordneten Ventilen 28 versehen ist. Unterhalb des Behälters ist eine Wanne 25 angeordnet, die über absperrbare Leitungen mit den einzelnen Abteilen des Behälters 20 in Verbindung steht.

Die Vorrichtung arbeitet wie folgt:

Das dem ersten Modul über die Leitungen 17 und 26 zugeführte Gemisch gelang zunächst in den Zulaufverteiler des ersten Moduls und durchströmt dessen etwa 40 poröse Schläuche 24. Dabei tritt ein Teil des Wassers durch die Poren der Schläuche aus und sammelt sich in dem zugehörigen Abteil des Behälters, aus dem es über die Abzugleitung 29 in die Wanne 30 abtropft, während das restliche Gemisch die Schläuche durchläuft und in den Ablaufverteiler 23 des ersten Moduls gelangt. Aus diesen fließt es über die Leitungen 26 in den Zulaufverteiler des nächsten Moduls, durchströmt in der gleichen Weise dieses und die folgenden Module, so daß in den Abschnitt 18 der Umwälzleitung ein teilweise eingedickter Schlamm übertritt, der erneut im Kreislauf durch die einzelnen Module geführt wird. Von Zeit zu Zeit wird ein gut pumpfähiger eingedickter Schlamm über den Abzug 19 abgezogen.

Zweckmäßigerweise haben die Schläuche, die auch als Kissen ausgebildet sein können, eine Länge von etwa 12 Metern bei einem Durchmesser von etwa 1 Zoll. Durch die Umwälzpumpe wird der Schlamm mit einer Geschwindigkeit von etwa 1 bis 3 m/s durch die Schläuch geleitet, so daß sich, wenn überhaupt, nur ein geringer Belag an den Wandungen der Schläuche aufbauen kann. Der Anstieg der Verstopfung und die Vergrößerung des Belages wird über eine Differenzdruckmessung zwischen Eingang und Ausgang jedes Moduls gemessen. Die Trübstoffmenge, die der Eindickfiltration konstant zugeführt wird, entspricht im Druckbereich von 0,8 bis maximal 4 bar dem Filtrat, d. h. dem Wasserdurchgang durch die porösen Schläuche und dem eingedickten, über den Abzug 19 abgezogenen Schlamm.

Der Eindickungsgrad des Schlammes wird bei annähernd konstanten Verhältnissen der Trübstoffmenge im Zulauf als Funktion der Zulaufmenge FIR 1, z. B. Eindickungsgrad 1:8 als Sollwert einer Meßeinrichtung FIR 2 vorgegeben. Die Schlammablaßmenge kann über ein geregeltes Ventil oder über eine Dichtemessung im Schlammablauf 19 ebenfalls eingestellt werden.

Alle Module sind an ein Spülsystem angeschlossen, das aus einem Waschmittelbehälter 31 mit einer Spülwasserpumpe 32 und einer Zuführungsleitung 33 besteht. Die Leitung 33 ist über eine entsprechende Anzahl von Ventilen, im vorliegenen Fall sechs Ventile an die zum Zulaufverteiler jedes einzelnen Moduls führende Leitung angeschlossen, während an die vom Ablaufverteiler jedes Moduls zur Leitung 27 führende Leitung eine ebenfalls mit Ventilen versehene Abzugleitung 34 angeschlossen ist, über die das Spülwasser in den Waschmittelbehälter zurückgeleitet wird.

Dem Waschbehälter kann über zusätzliche Leitungen 35 und 36 Ergänzungswasser zugeleitet bzw. Waschmittel zugesetzt werden. Selbstverständlich wird das jeweils mit Spülwasser beaufschlagte Modul von der Umwälzleitung abgeschaltet. Ferner hat es sich als zweckmäßig erwiesen, als Schlußspülung eine kurzfristige Spülung mit einem erhöhten Druck von beispielsweise 4 bis 6 bar vorzunehmen, um die Poren der Schläuche zu säubern. Das trübe Wasser, das durch die Schläuche geht, wird nicht in die Wanne abgeleitet, sondern zum Waschmittelbehälter zurückgeführt.

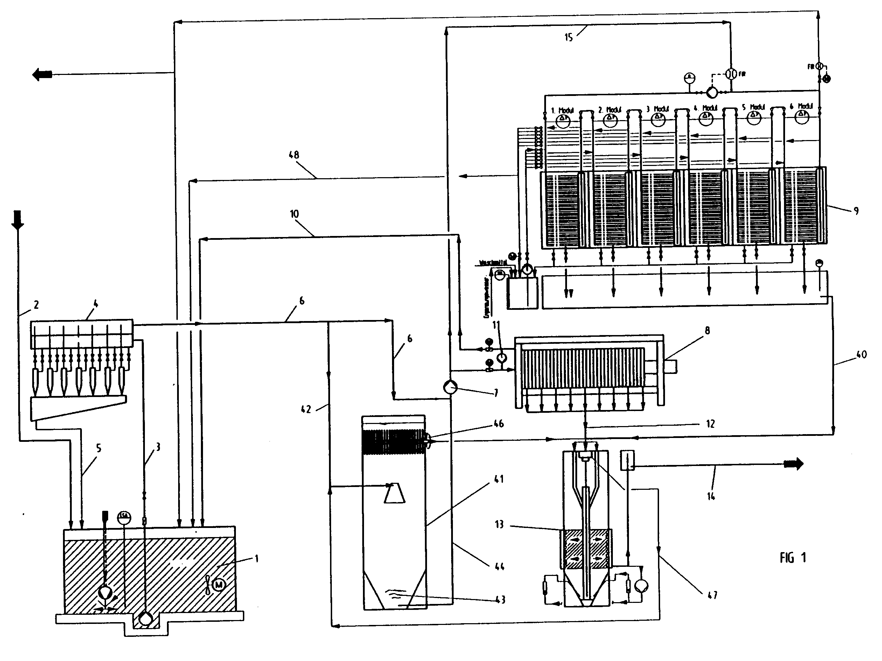

Das in der Wanne 30 anfallende Filtrat wird über die Leitung 40 (Fig. 1) der Sandfiltration 13 zugeführt.

Bei einer abgeänderten auf Fig. 1 dargestellten Ausführungsform ist vorgesehen, das aus der Hydrozyklonstufe 4 ablaufende aus Schlamm und Abwasser bestehende Gemisch bevor es in die Eindickfiltration gelangt, in einem Eindicker 41 (Fig. 1) einer Eindickung zu unterwerfen. Das Gemisch wird dem Eindicker über eine Leitung 42 zugeführt, die von der Leitung 6 abgeht. Der sich im unteren konisch zulaufenden Abschnitt 43 des Eindickers ansammelnde Schlamm wird über eine mit der Pumpe 7 verbundene Leitung 44 abgezogen und einem der Eindickfilter 8 oder 9 zugeführt. Das im oberen Teil des Eindickers anfallende Abwasser wird über ein Tuchfilter 46 von aufschwimmenden Feststoffen befreit und im Sandfilter 13 endgereinigt; Rückspülabwasser wird über eine Leitung 47 in den Eindicker zurückgeführt.

Mit 48 ist in Fig. 1 eine Leitung bezeichnet, über die das erste Spülwasser, das mit Schlamm hochbelastet ist, aus den Eindickfiltrationen 8 bzw. 9 in das Belebtbecken 1 zurückgeführt wird.

## Patentansprüche

1. Verfahren zur biologischen Reinigung von organisch belasteten Abwässern, bei dem die Abwasserinhaltsstoffe in einem Bioreaktor oder Belebtbecken mikrobiell umgesetzt werden, von dem dabei entstehenden Schlamm das behandelte Wasser abgetrennt wird und der abgetrennte Schlamm zum Teil in den Bioreaktor bzw. das Belebtbecken zurückgeführt und zum Teil als Überschußschlamm abgeführt wird, wobei das in dem Bioreaktor bwz. dem Belebtbecken behandelte Abwasser zunächst eine Hydrozyklonstufe durchläuft, aus der die abgeschiedenen Feststoffe in den Bioreaktor bzw. das Belebtbecken zurückgeführt werden und aus deren Überlaufwasser der darin enthaltene Schlamm unter erhöhtem Druck abgefiltert und eingedickt wird, **dadurch gekennzeichnet,**daß dem zu behandelnden Abwasser Kohle mit einer Korngröße von 30 bis 500 µm beigemischt wird, die als Trägermaterial für die Bakterien und als Hydrozyklonhilfe dient und daß der durch Eindicken entstehende pumpfähige Schlamm zum Teil als Rücklaufschlamm dem zu behandelnden Abwasser beigegeben wird und zum Teil als Überschußschlamm abgezogen wird.

2. Verfahren nach Anspruch 1, dadurch gekennzeichnet daß das bei der Eindickfiltration entstehende Abwasser abschließend einer Sandfiltration unterzogen wird.

3. Verfahren nach Anspruch 1, dadurch gekennzeichnet, daß als Kohle Aktivkohle zugesetzt wird.

4. Verfahren nach einem der Ansprüche 1 bis 3, dadurch gekennzeichnet, daß in dem Bioreaktor oder Belebtbecken vorliegende Gemisch so eingestellt wird, daß es 1 bis 1,5 % Kohle und 2 bis 3 % Belebtschlamm enthält.

5. Verfahren nach einem der vorhergehenden Ansprüche, dadurch gekennzeichnet, daß der Feststoffgehalt des aus der Hydrozyklonstufe in das Belebtbecken zurückgeführten Gemisches 10 bis 20 % beträgt.

6. Verfahren nach einem der vorhergehenden Ansprüche, dadurch gekennzeichnet, daß der Feststoffanteil des von der Eindickfiltration in das zu behandelnde Abwasser zurückgeführten Gemisches 8 bis 10 % beträgt.

7. Verfahren nach einem der vorangehenden Ansprüche, dadurch gekennzeichnet, daß das Überlaufwasser der Hydrozyklonstufe zusammen mit dem darin enthaltenen Schlamm vor der Eindickfiltration in einem Eindicker eingedickt wird, aus dem der abgesetzte Schlamm abgezogen und mittels einer Pumpe unter erhöhtem Druck der Eindickfiltration zugeführt wird, während das anfallende Wasser, gegebenenfalls nach abtrennen der Trübstoffe, direkt in die Sandfiltration eingeleitet wird.

8. Verfahren nach Anspruch 7, dadurch gekennzeichnet, daß aus der Druckleitung zwischen dem Eindicker und der Eindickfiltration Überschußschlamm abgezogen wird.

9. Verfahren nach einem der Ansprüche 1 bis 7, dadurch gekennzeichnet, daß der Abzug von Überschußschlamm aus der von der Eindickfiltration zum Bioreaktor bzw. Belebtbecken führenden Leitung erfolgt.

10. Verfahren nach einem der vorhergehenden Ansprüche, dadurch gekennzeichnet, daß die mikrobielle Umsetzung unter aeroben Bedingungen durchgeführt wird.

11. Verfahren nach einem der Ansprüche 1 bis 9, dadurch gekennzeichnet, daß die mikrobielle Umsetzung unter anaeroben Bedingungen durchgeführt wird.

12. Verfahren nach einem der Ansprüche 1 bis 11, dadurch gekennzeichnet, daß die mikrobielle Umsetzung bei einem maximalem Überdruck von 1 bar erfolgt.

13. Vorrichtung zur Durchführung des Verfahrens nach Anspruch 1, gekennzeichnet durch einen Bioreaktor oder ein Belebtbecken (1) mit Zugabevorrichtungen für das zu behandelnde Abwasser und Kohle und einer dem Bioreaktor oder Belebtbecken (1) nachgeschalteten Hydrozyklonstufe (4), deren Feststoffaustrag mit dem Bioreaktor bzw. Belebtbecken (1) verbunden ist und an deren Überlauf eine Eindickfilteranlage (8 bzw. 9) angeschlossen ist, deren Schlammaustrag mit einer zum Bioreaktor bzw. Belebtbecken (1) führenden Schlammrückführungsleitung und einem Austrag für den Überschußschlamm verbunden ist.

14. Vorrichtung nach Anspruch 13, dadurch gekennzeichnet daß der Eindickfilteranlage (8 bzw. 9) ein Sandfilter (13) für die Nachreinigung des bei der Eindickfiltration anfallenden Abwassers nachgeschaltet ist.

15. Vorrichtung nach Anspruch 13, dadurch gekennzeichnet, daß der Bioreaktor (1) ein Hochbehälter mit ca. 6 bis 15 m WS ist.

16. Vorrichtung nach Anspruch 13, dadurch gekennzeichnet, daß die Hydrozyklonstufe (4) als Multizyklonstufe mit einer Vielzahl von Zyklonen der Nenngröße 40 bis 100 mm Durchmesser ausgebildet ist.

17. Vorrichtung nach einem der Ansprüche 13 bis 16, dadurch gekennzeichnet, daß die Eindickfilteranlage eine Rahmen-Kammerfilterpresse (8) aufweist, deren Filtrationsplatten mit Rillen versehen sind, die schneckenförmig vom Umfang zum Zentrum der Platten oder umgekehrt geführt sind und die durch Filtertücher derart abgedeckt und abgedichtet sind, daß Kammern gebildet werden wobei das den Kammern unter Druck zugeführte Feststoff-Flüssigkeitsgemisch den schneckenförmigen Gängen folgt und durch die Filtertücher entwässert und eingedickt wird.

18. Vorrichtung nach einem der Ansprüche 13 bis 16, dadurch gekennzeichnet, daß die Eindickfilteranlage eine Einrichtung (9) zum Umwälzen des zu entwässernden Schlammes in wenigstens einem Modul aufweist, das vorzugsweise in einem Behälter (20) angeordnet ist und aus einem Zulaufverteiler (22) und einem Ablaufverteiler (23) besteht, die über eine mit einer Umwälzpumpe (16) versehene Leitung (17, 18) miteinander verbunden sind und zwischen denen eine Anzahl poröser schlauchartiger Filter (24) angeordnet ist, die den Schlamm zurückhalten, der aus der Kreislaufleitung (18) ausschleusbar ist, während das Abwasser getrennt abgezogen und in einer unterhalb des Moduls angeordneten Wanne (30) aufgefangen wird.

19. Vorrichtung nach Anspruch 18, dadurch gekennzeichnet, daß zwischen dem Zulaufverteiler (22) und dem Ablaufverteiler (23) 1 bis 50 poröse schlauchartige Filter (24) mit einer Länge von vorzugsweise etwa 12 m angeordnet sind.

20. Vorrichtung nach den Ansprüchen 18 und 19, dadurch gekennzeichnet, daß die Filter aus porösen Schläuchen (24) bestehen.

21. Vorrichtung nach den Ansprüchen 18 und 19, dadurch gekennzeichnet, daß die Filter aus zu Kissen aneinandergereihten Schläuchen bestehen.

22. Vorrichtung nach einem der Ansprüche 18 bis 21, dadurch gekennzeichnet, daß 2 bis 10, vorzugsweise 6 Module hintereinander geschaltet sind, wobei der Zulaufverteiler (22) des ersten Moduls und der Ablaufverteiler (23) des letzten Moduls über eine Umwälzleitung (17, 18) miteinander verbunden sind.

23. Vorrichtung nach einem der Ansprüche 18 bis 22, dadurch gekennzeichnet, daß die einzelnen Module getrennt durch mit Ventilen (25) versehene Leitungen (16) mit der Kreislaufleitung (17) verbunden und getrennt zu- oder abschaltbar sind.

24. Vorrichtung nach einem der Ansprüche 18 bis 22, dadurch gekennzeichnet, daß die einzelnen Module an ein Spülsystem (31 bis 34) angeschlossen sind, über das die einzelnen Module unabhängig voneinander beaufschlagbar sind, nachdem sie von der Umwälzleitung (17) abgeschaltet sind.

## Claims

1. A process for the biological purification of organically charged effluents, in which the effluent contents are microbially transformed in a bioreactor or activation vessel, the treated water is separated from the sludge which is produced in that operation, and the separated sludge is fed back in part into the bioreactor or the activation vessel and is discharged in part as excess sludge, wherein the effluent which is treated in the bioreactor or the activation vessel firstly passes through a hydrocyclone stage from which the separated solid substances are fed back into the bioreactor or the activation vessel and the sludge contained therein is filtered off from the overflow water thereof, under increased pressure, and thickened, characterised in that carbon of a grain size of 30 to 500 µm is added to the effluent to be treated, the carbon serving as a carrier material for the bacteria and as a hydrocyclone aid, and that the pumpable sludge produced by thickening is in part added as a recycled sludge to the effluent to be treated and is in part drawn off as excess sludge.

2. A process according to claim 1 characterised in that the effluent produced in the thickening filtration operation is then subjected to a sand filtration operation.

3. A process according to claim 1 characterised in that activated carbon is added as the carbon.

4. A process according to one of claims 1 to 3 characterised in that the mixture present in the bioreactor or the activation vessel is so adjusted that it contains from 1 to 1.5% carbon and from 2 to 3% activated sludge.

5. A process according to one of the preceding claims characterised in that the solids content of the mixture which is recycled from the hydrocyclone stage into the activation vessel is from 10 to 20%.

6. A process according to one of the preceding claims characterised in that the solids proportion of the mixture which is recycled from the thickening filtration operation into the effluent to be treated is from 8 to 10%.

7. A process according to one of the preceding claims characterised in that the overflow water of the hydrocyclone stage is thickened together with the sludge contained therein prior to the thickening filtration operation in a thickener from which the deposited sludge is drawn off and fed by means of a pump under elevated pressure to the thickening filtration operation while the water produced, possibly after the turbidities have been separated off, is introduced directly into the sand filtration operation.

8. A process according to claim 7 characterised in that excess sludge is drawn off from the pressure line between the thickener and the thickening filtration operation.

9. A process according to one of claims 1 to 7 characterised in that the step of drawing off excess sludge is effected from the line leading from the thickening filtration operation to the bioreactor or the activation vessel.

10. A process according to one of the preceding claims characterised in that the microbial transformation operation is implemented under aerobic conditions.

11. A process according to one of claims 1 to 9 characterised in that the microbial transformation operation is implemented under anaerobic conditions.

12. A process according to one of claims 1 to 11 characterised in that the microbial transformation operation is effected at a maximum pressure above atmospheric of 1 bar.

13. Apparatus for carrying out the process according to claim 1 characterised by a bioreactor or an activation vessel (1) with feed devices for the effluent to be treated and carbon and a hydrocyclone stage (4) which is connected downstream of the bioreactor or activation vessel (1) and whose solids discharge is connected to the bioreactor or activation vessel (1) and to the overflow of which is connected a thickening filter installation (8 and 9 respectively) whose sludge discharge is connected to a sludge return line leading to the bioreactor or activation vessel (1), and a discharge for the excess sludge.

14. Apparatus according to claim 13 characterised in that connected downstream of the thickening filter installation (8 and 9 respectively) is a sand filter (13) for subsequent purification of the effluent which occurs in the thickening filtration operation.

15. Apparatus according to claim 13 characterised in that the bioreactor (1) is a high-level container with about 6 to 15 m WG.

16. Apparatus according to claim 13 characterised in that the hydrocyclone stage (4) is in the form of a multicyclone stage with a plurality of cyclones of a nominal size of 40 to 100 mm diameter.

17. Apparatus according to one of claims 13 to 16 characterised in that the thickening filter installation has a frame chamber filter press (8) whose filtration plates are provided with grooves which extend in a spiral configuration from the periphery to the centre of the plates or vice-versa and which are covered over and sealed off by filter cloths in such a way that chambers are formed, wherein the solids-liquid mixture which is fed to the chambers under pressure follows the spiral paths and is dewatered and thickened by the filter cloths.

18. Apparatus according to one of claims 13 to 16 characterised in that the thickening filter installation has a device (9) for circulating the sludge to be dewatered in at least one module which is preferably arranged in a container (20) and comprises a feed distributor (22) and a discharge distributor (23) which are connected together by way of a line (17, 18) provided with a circulating pump (16) and between which is arranged a number of porous tubular filters (24) which retain the sludge which can be removed from the circulation line (18) while the effluent is drawn off separately and caught in a trough (30) arranged beneath the module.

19. Apparatus according to claim 18 characterised in that arranged between the feed distributor (22) and the discharge distributor (23) are 1 to 50 porous tubular filters (20) of a length of preferably about 12m.

20. Apparatus according to claims 18 and 19 characterised in that the filters comprise porous tubes (24).

21. Apparatus according to claims 18 and 19 characterised in that the filters comprise tubes which are strung together to form pads.

22. Apparatus according to one of claims 18 to 21 characterised in that 2 to 10 and preferably 6 modules are connected in succession, wherein the feed distributor (22) of the first module and the discharge distributor (23) of the last module are connected together by way of a circulation line (17, 18).

23. Apparatus according to one of claims 18 to 22 characterised in that the individual modules are separately connected to the circuit line (19) by lines (16) provided with valves (25) and can be separately switched on or shut down.

24. Apparatus according to one of claims 18 to 22 characterised in that the individual modules are connected to a flushing system (31 to 34) by way of which the individual modules can be acted upon independently of each other after they are disconnected from the circulation line (17).

## Revendications

1. Procédé pour l'épuration biologique d'eaux usées chargées organiquement, où les matières contenues dans les eaux usées sont transformées microbiellement dans un bioréacteur ou un bassin activé, où il est séparé de la boue ainsi produite l'eau traitée et où la boue séparée est ramenée partiellement dans le bioréacteur respectivement le bassin activé et est évacué en partie comme boue excédentaire, où l'eau usée traitée dans le bioréacteur respectivement le bassin activé traverse tout d'abord un étage d'hydrocyclone à partir duquel les matières solides éliminées sont ramenées dans le bioréacteur respectivement le bassin activé et à partir de l'eau de débordement de celui-ci, la boue contenue dans celle-ci est filtrée et épaissie sous une pression plus élevée, caractérisé en ce qu'on ajoute aux eaux usées à traiter du charbon d'une grandeur de grain de 30 à 500 µm qui sert de matériau de support pour les bactéries et comme aide à l'hydrocyclone et en ce que la boue apte à être pompée, produite par l'épaississement, est ajoutée en partie comme boue de recyclage aux eaux usées à traiter et est retirée en partie comme boue excédentaire.

2. Procédé selon la revendication 1, caractérisé en ce que les eaux usées produites lors de la filtration d'épaississement sont soumises ensuite à une filtration au sable.

3. Procédé selon la revendication 1, caractérisé en ce qu'on ajoute comme charbon, du charbon actif.

4. Procédé selon l'une des revendications 1 à 3, caractérisé en ce que le mélange dans le bioréacteur ou le bassin activé est réglé de façon qu'il contient 1 à 1,5% de charbon et 2 à 3% de boue activée.

5. Procédé selon l'une des revendications précédentes, caractérisé en ce que la teneur en matières solides du mélange ramené de l'étage de l'hydrocyclone dans le bassin activé représente 10 à 20%.

6. Procédé selon l'une des revendications précédentes, caractérisé en ce que la part en matières solides du mélange ramené par la filtration d'épaississement dans les eaux usées à traiter représente 8 à 10%.

7. Procédé selon l'une des revendications précédentes, caractérisé en ce que l'eau de débordement de l'étage de l'hydrocyclone, conjointement avec la boue contenue dans celle-ci, est épaissie avant la filtration d'épaississement dans un épaississeur duquel la boue déposée est retirée et est amenée par une pompe sous une plus grande pression à la filtration d'épaississement tandis que l'eau produite, le cas échéant après la séparation des matières boueuses est amenée directement à la filtration au sable.

8. Procédé selon la revendication 7, caractérisé en ce qu'il est retiré de la conduite sous pression entre l'épaississeur et la filtration d'épaississement de la boue excédentaire.

9. Procédé selon l'une des revendications 1 à 7, caractérisé en ce que le retrait de la boue excédentaire a lieu de la conduite menant de la filtration d'épaississement au bioréacteur respectivement au bassin activé.

10. Procédé selon l'une des revendications précédentes, caractérisé en ce que la transformation microbielle est effectuée sous des conditions d'aérobie.

11. Procédé selon l'une des revendications 1 à 9, caractérisé en ce que la transformation microbielle a lieu sous des conditions d'anaérobie.

12. Procédé selon l'une des revendications 1 à 11, caractérisé en ce que la transformation microbielle a lieu à une surpression maximale de 1 bar.

13. Dispositif pour la mise en oeuvre du procédé selon la revendication 1, caractérisé par un bioréacteur ou un bassin activé (1) avec des dispositifs d'amenée pour les eaux usées à traiter et pour le charbon et un étage d'hydrocyclone (4) monté en aval du bioréacteur ou du bassin activé (1) dont la sortie en matières solides est reliée au bioréacteur respectivement au bassin activé (1) et au trop plein duquel est raccordée une installation de filtration d'épaississement (8 respectivement 9) dont la sortie de boue est reliée à une conduite de recyclage de boue menant vers le bioréacteur respectivement le bassin activé (1) et une sortie pour la boue excédentaire.

14. Dispositif selon la revendication 13, caractérisé en ce qu'il est monté en aval de l'installation de filtration d'épaississement (8 respectivement 9) un filtre à sable (13) pour l'épuration subséquente des eaux usées produites lors de la filtration d'épaississement.

15. Dispositif selon la revendication 13, caractérisé en ce que le bioréacteur (1) est un réservoir surélevé avec environ 6 à 15 m WS.

16. Dispositif selon la revendication 13, caractérisé en ce que l'étage d'hydrocyclone (4) est réalisé sous forme d'étage multicyclone avec une pluralité de cyclones de la grandeur nominale d'un diamètre de 40 à 100 mm.

17. Dispositif selon l'une des revendications 13 à 16, caractérisé en ce que l'installation de filtration d'épaississement présente un filtre-presse à chambres à cadre (8) dont les plaques de filtration sont pourvues de rainures qui sont guidées hélicoïdalement depuis le pourtour vers le centre des plaques ou inversement et qui sont recouvertes et rendues étanches par des tissus filtrants de façon à former des chambres, où le mélange de liquide et de matières solides amené aux chambres sous pression suit les pas hélicoïdaux et est drainé et épaissi par les tissus filtrants.

18. Dispositif selon l'une des revendications 13 à 16, caractérisé en ce que l'installation de filtration d'épaississement présente un dispositif (9) pour la circulation de la boue à drainer dans au moins un module qui est disposé de préférence dans un récipient (20) et qui est constitué d'un collecteur d'arrivée (22) et d'un collecteur de sortie (23) qui sont reliés par une conduite (17, 18) pourvue d'une pompe de circulation (16) et entre lesquels est disposé un certain nombre de filtres poreux en forme de tuyaux (24) qui retiennent la boue qui peut être évacuée de la conduite circulaire (18) alors que les eaux usées sont retirées séparément et sont récupérées dans une cuve (30) disposée en dessous du module.

19. Dispositif selon la revendication 18, caractérisé en ce que sont disposés entre le collecteur d'arrivée (22) et le collecteur de sortie (23) 1 à 50 filtres poreux en forme de tuyau (24) d'une longueur de préférence d'environ 12 m.

20. Dispositif selon les revendications 18 et 19, caractérisé en ce que les filtres sont constitués de tuyaux poreux (24).

21. Dispositif selon les revendications 18 et 19, caractérisé en ce que les filtres sont constitués de tuyaux disposés les uns à côté des autres pour former des coussins.

22. Dispositif selon l'une des revendications 18 à 21, caractérisé en ce que 2 à 10, de préférence 6 modules sont montés les uns derrière les autres, le collecteur d'arrivée (22) du premier module et le collecteur de sortie (23) du dernier module étant reliés l'un à l'autre par une conduite de circulation (17, 18).

23. Dispositif selon l'une des revendications 18 à 22, caractérisé en ce que les modules individuels sont reliés séparément par des conduites (16) pourvues de vannes (25) à la conduite de circulation (17) et peuvent être mis en ou hors service séparément.

24. Dispositif selon l'une des revendications 18 à 22, caractérisé en ce que les différents modules sont raccordés à un système de rinçage (31 à 34) par lequel les modules individuels peuvent être sollicités indépendamment les uns des autres après avoir été déconnectés de la conduite de circulation (17).
